Europäisches Patentamt

(19) European Patent Office

Office européen des brevets

(11) Publication number: **0 021 658**
**B1**

(12) **EUROPEAN PATENT SPECIFICATION**

(45) Date of publication of patent specification: **20.07.83**

(51) Int. Cl.³: **F 16 D 51/46**

(21) Application number: **80301874.6**

(22) Date of filing: **05.06.80**

(54) Internal shoe drum brakes for overrun braking systems.

(30) Priority: **29.06.79 GB 7922782**

(43) Date of publication of application:
**07.01.81 Bulletin 81/1**

(45) Publication of the grant of the patent:
**20.07.83 Bulletin 83/29**

(84) Designated Contracting States:
**DE FR**

(56) References cited:
**DE - U - 7 325 794**
**US - A - 3 951 243**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Osborne, Duncan William**
**7 Mosspaul Close**
**Leamington Spa, Warwickshire (GB)**

Internal shoe drum brakes for overrun braking systems

This invention relates to internal shoe drum brakes for overrun braking systems for vehicle trailers and particularly to those brakes sensitive to the direction of rotation of the brake drum to give effective braking torque in one direction and negligible braking torque in the opposite direction.

Overrun braking systems are usually operable by an overrun linkage, sensitive to a reducing distance between the towing vehicle and the trailer, to actuate the trailer brakes. One problem with such systems is that the trailer brakes are applied on reversing of the towing vehicle/trailer combination as well as during forward deceleration. External latches to render the overrun linkage inoperable during reversing are known as a solution but one more widely adopted is the use of reversing drum brakes. Such brakes are sensitive to the direction of rotation of the brake drum to give effective braking torque in one direction and negligible braking torque in the opposite direction. US Patent No. 3 951 243 discloses a drum brake having a pivoted lever to space apart one pair of adjacent brake shoe ends. The shoes act on the lever at different effective radii to hold the shoe ends at a first effective spacing during forward rotation to give normal braking torque and at a second effective spacing during reverse rotation to give limited braking torque.

According to the invention there is provided a reversing drum brake comprising a back plate, a first brake shoe, a second brake shoe, an expander device between opposed ends of the shoes and a support member including a variable length strut between the other opposed ends of the shoes and having means by which the strut is guided to and from major and minor effective length conditions dependent upon the direction of rotation of the brake drum, characterised thereby that said strut comprises a two armed toggle whose free ends are arranged for respective pivotal connection each to one respective adjacent brake shoe end and that the intermediate pivot is guided to modify the effective length conditions of the toggle between the ends of the brake shoes.

Other features of the invention are included in the following description of three preferred embodiments shown by way of example in the accompanying drawings in which:—

Fig. 1 is a plan view of a reversing drum brake according to a first embodiment of the invention and shown in the forwards rotation operating mode;

Fig. 2 is the brake depicted in Fig. 1 shown in the reverse rotation operating mode;

Fig. 3 is the brake depicted in Figs. 1 and 2 shown in the parking mode;

Fig. 4 is a part plan view of a reversing drum brake according to a second embodiment of the invention and shown in the forwards rotation operating mode; and

Fig. 5 is a part plan view of a reversing drum brake according to a third embodiment of the invention and shown in the forwards rotation operating mode.

The brake to be described is intended for fitting to a vehicle trailer, such as a caravan, and is responsive to the usual trailer drawbar overrun linkage.

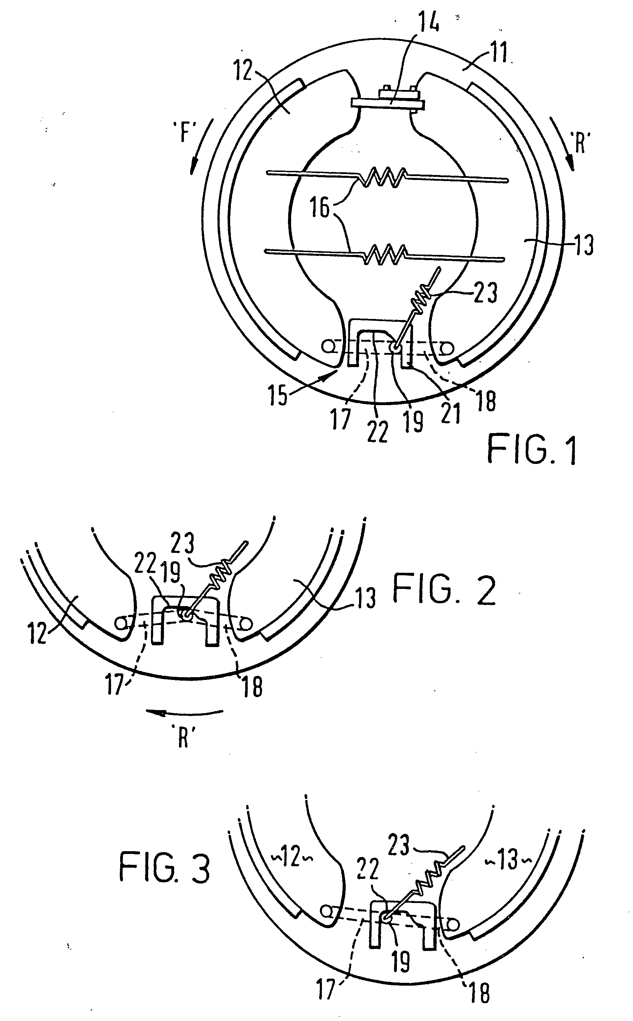

With reference to Fig. 1 there is shown a reversing drum brake comprising a backplate 11 on which a first brake shoe 12 and a second brake shoe 13 are conventionally mounted between a floating mechanical expander 14 and an abutment member 15. Pull-off springs 16 hold the shoes 12, 13 in the inactive position. The forwards direction of rotation of a brake drum (not shown) is indicated by arrow "F", and the reverse direction of rotation by arrow "R".

The mechanical expander 14 is of conventional construction and operates in response to the trailer overrun linkage to urge the adjacent ends of shoes 12, 13 apart. The overrun linkage has a predetermined maximum travel and hence the ultimate separation of the adjacent shoe ends in response to the linkage is fixed.

The other ends of the brake shoes 12, 13 are linked by a two arm toggle 17, 18 pivotally connected to either shoe end and at the pivot point of the arms to a free roller 19, whose axis is parallel to the axis of the brake drum.

A generally "U" shaped abutment 21, mounted on the backplate between said other shoe ends, provides an internal cam surface 22 for the roller 19. A light tension spring 23 biases the roller 19 towards that end of the cam surface 22 adjacent the brake shoe 13.

The operation of the reversing drum brake is as follows:—

During braking in forward travel of the trailer the expander 14 is actuated by the overrun linkage to urge the adjacent shoe ends apart against the action of the pull-off springs 16.

The braking torque reaction of the brake shoe 12, the leading shoe, is taken directly by the abutment 21. (The reaction may alternatively be transmitted through the toggle arm 17 and the roller 19 to the end cam face of the surface 22). The reaction of the brake shoe 13, the trailing shoe, is resisted through the toggle 17, 18, but since the reaction force of a leading shoe is greater than that of a trailing shoe no servo effort from the brake shoe 12 is transmitted to the shoe 13. Thus the brake operates as a normal leading/trailing shoe drum brake in forward travel of the trailer.

During braking in reverse travel of the trailer and with reference to Fig. 2 the brake shoe 13 becomes a leading shoe, the braking torque reaction of which is transmitted through the toggle arm 18 to the roller 19. Roller 19 follows cam surface 22, against the effect of light spring 23, to draw the shoe 13 away from the brake drum and hence counter the actuation of expander 14. Since the expander 14 floats, negligible braking torque is effected on the brake drum by the brake shoe 12 which is now the trailing shoe.

The depth of the cam surface 22 is chosen to negate the effect of the expander 14 in response to the maximum overrun linkage travel and thus negligible braking torque is developed during reverse travel of the trailer.

One particular problem with rotation sensitive drum brakes of this kind occurs with the following set of circumstances:—

A vehicle and trailer halt on a slight slope and the overrun linkage holds the trailer brake applied in the forwards direction of rotation, the usual handbrake is applied to override the reversing drum brake and the vehicle is unhitched from the trailer. The trailer is subsequently nudged backwards and the braking torque reaction causes the variable length strut to shorten and allow one pair of shoe ends to approach to release the brake (Fig. 2), the trailer brake remains inoperative and the trailer rolls away.

To obviate this danger with the present brake, a spring box is incorporated in the handbrake linkage so that the expander 14 is capable of being actuated beyond the maximum available from the overrun linkage. Should the aforementioned set of circumstances occur and the trailer brake release (Fig. 2), the handbrake linkage spring box will over-travel the expander 14. The brakes shoes 12, 13 expander 14 and toggle 17, 18 will rotate as a unit on the back plate as they lightly touch the reversing drum until the toggle roller 19 abuts a stop on the cam surface 22 (Fig. 3). This stop will provide a fixed abutment for the brake shoes and the trailer brake will then be re-applied by the spring box spring. The fixed stop for shoe 13 can alternatively be provided by the abutment 21.

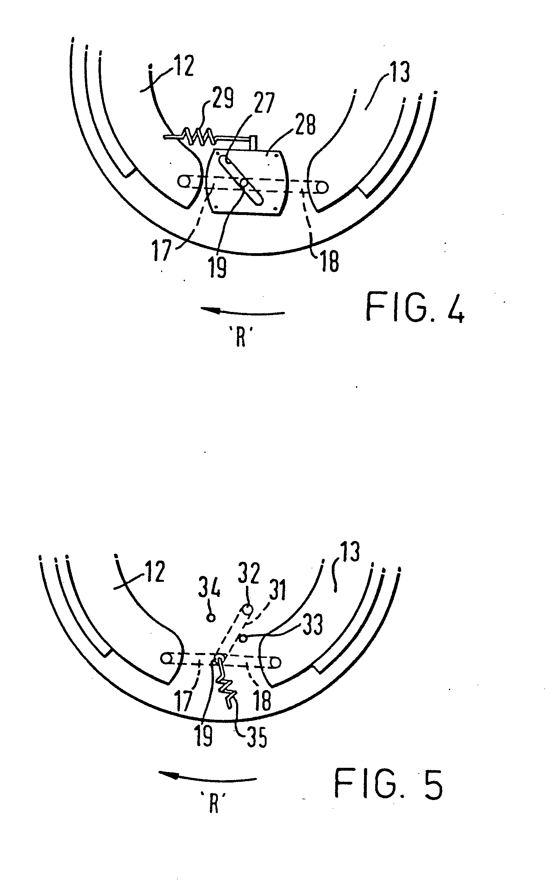

In the second embodiment, shown in Fig. 4, parts common with the first embodiment are given the same reference numerals, the operation of the brake is as before. The roller 19 of the toggle 17, 18 is guided in an oblique slot 27 formed in an abutment 28 mounted between the adjacent ends of the brake shoes 12, 13. A light spring 29 acts to return the roller to the bottom of slot 27.

In operation, and during braking in forward travel of the trailer, the expander is operated to urge the brake shoes 12, 13 apart and apply the brakes. The braking torque reaction of the leading shoe 12 is taken directly by the abutment 28 and the braking torque reaction of the trailing shoe 13 is resisted through the toggle 12, 13 in the manner already described.

During braking in reverse travel of the trailer, the roller 19 is pushed towards the top of the slot 27 by the torque reaction from the leading shoe 13, the toggle 17, 18 folds and the shoe 13 is drawn away from the brake drum to counter the effect of the floating expander 14. Thus negligible braking torque is effected on the brake drum in reverse rotation.

On application of the handbrake through the spring box as previously described, a fixed stop is eventually provided for shoe 13 by the abutment 28 or, through the toggle link 18, by the roller 19 at the end of the slot 27.

In the third embodiment, shown in Fig. 5, a third toggle arm 31, is substituted for the abutments 21, 28 of the previous embodiments.

The toggle arm 31 is pivoted at one end on the roller 19 and at the other end to a fixed pivot 32 on the back plate 11. A forward stop pin 33 and a reverse stop pin 34 limited the possible angle of rotation of the arm 31 about the fixed pivot 32. A light tension spring 35 urges the arm 31 against the forward stop pin 33.

During braking in forward travel of the trailer, the leading shoe 12 takes its abutment, through toggle arms 17 and 31, on forward stop pin 33. The braking torque reaction of the trailing shoe is taken through toggle arm 18 as previously described.

During braking in reverse travel of the trailer the torque reaction from the leading shoe 13 folds the toggle 17, 18 against the action of spring 35, pivoting the arm 31 away from the stop pin 33 and thus countering the actuation of the expander 14. The reverse stop pin 34 provides an eventual abutment for brake shoe 13 during handbrake operation of the brake.

## Claims

1. A reversing drum brake comprising a back plate, (11) a first brake shoe (12), a second brake shoe (13), an expander device (14) between opposed ends of the shoes and a support member (15) including a variable length strut between the other opposed ends of the shoes and having means (22, 27, 31) by which the strut is guided to and from major and minor effective length conditions dependent upon the direction of rotation of the brake drum, characterised thereby that said strut comprises a two armed toggle (17, 18) whose free ends are arranged for respective pivotal connection each to one respective adjacent brake shoe end and that the intermediate pivot (19) is guided to modify the effective length conditions of the toggle between the ends of the brake shoes.

2. A drum brake according to Claim 1, characterised thereby that the intermediate pivot is guided by a cam surface (22, 27) formed on the support member.

3. A drum brake according to Claim 2, characterised thereby that the intermediate pivot carries a co-axial roller (19) resiliently biased against the cam surface (22) to urge the toggle arms (17, 18) towards the major effective length condition.

4. A drum brake according to Claim 3, characterised thereby that the cam surface is constituted by an oblique slot (27).

5. A drum brake according to Claim 1, characterised thereby that the intermediate pivot is guided by a guide link (31) for pivotal connection between the intermediate pivot and the brake backplate.

6. A drum brake according to Claim 5, characterised thereby that the guide link is arranged to be resiliently biased against an abutment (33) to urge the toggle arms towards the major effective length condition.

## Patentansprüche

1. Rückfahrtrommelbremse umfassend eine Rückplatte (11), eine erste Bremsbacke (12), eine zweite Bremsbacke (13), eine Expandervorrichtung (14) zwischen sich gegenüberliegenden Enden der Backen und ein Lagerteil (15), das eine Strebe veränderlicher Länge zwischen den anderen sich gegenüberliegenden Enden der Backen einschließt und Mittel (22, 27, 31) hat, durch welche die Strebe je nach Drehrichtung der Trommelbremse in eine oder weg von einer Lage mit großer bzw. kleiner wirksamer Länge führbar ist, dadurch gekennzeichnet, daß die Strebe einen zweiarmigen Kniehebel (17, 18) umfaßt, von dem jedes freie Ende für eine jeweilige Drehverbindung mit einem zugehörigen benachbarten Bremsbackenende angeordnet ist, und daß der zwischenliegende Drehzapfen (19) zum Verändern der wirksamen Längenlagen des Kniehebels zwischen den Enden der Bremsbacken geführt ist.

2. Trommelbremse nach Anspruch 1, dadurch gekennzeichnet, daß der zwischenliegende Drehzapfen von einer Nockenfläche (22, 27) geführt wird, die an dem Lagerteil gebildet ist.

3. Trommelbremse nach Anspruch 2, dadurch gekennzeichnet, daß der zwischenliegende Drehzapfen eine koaxiale Rolle (19) trägt, der federnd gegen die Nockenfläche (22) gedrückt wird, um die Kniehebelarme (17, 18) in die Lage mit der großen wirksamen Länge zu drängen.

4. Trommelbremse nach Anspruch 3, dadurch gekennzeichnet, daß die Nockenfläche von einem schrägen Schlitz (27) gebildet wird.

5. Trommelbremse nach Anspruch 1, dadurch gekennzeichnet, daß der zwischenliegende Drehzapfen von einem Führungsglied (31) für eine Drehverbindung zwischen dem zwischenliegenden Drehzapfen und der Bremsrückplatte geführt wird.

6. Trommelbremse nach Anspruch 5, dadurch gekennzeichnet, daß das Führungsglied federnd gegen einen Anschlag (33) gedrückt wird, um die Kniehebelarme in die Lage mit der großen wirksamen Länge zu drängen.

## Revendications

1. Frein à tambour de marche arrière comprenant une plaque de support (11), une première mâchoire de frein (12), une seconde mâchoire de frein (13), un écarteur (14) entre les extrémités opposées des mâchoires et un support (15) comprenant une entretoise de longueur variable entre les autres extrémités opposées des mâchoires et ayant des moyens (22, 27, 31) par lesquels l'entretoise est guidée dans des conditions de longueur efficace grande et petite suivant le sens de rotation du tambour de frein, caracctérisé en ce que ladite entretoise est constituée par une genouillère à deux bras (17, 18), dont les extrémités libres sont agencées suivant une liaison articulée chacune sur une extrémité de la mâchoire de frein adjacente respective et en ce que l'axe intermédiaire (19) est guidé pour modifier les conditions de longueur efficace de la genouillère entre les extrémités des mâchoires de frein.

2. Frein à tambour suivant la revendication 1, caractérisé en ce que l'axe intermédiaire (19) est guidé par une surface de came (22, 27) formée sur le support.

3. Frein à tambour suivant la revendication 1, caractérisé en ce que l'axe intermédiaire porte un galet coaxial (19) sollicité élastiquement contre la surface de came (22) pour forces les bras de la genouillère (17, 18) vers la condition de grande longueur efficace.

4. Frein à tambour suivant la revendication 3, caractérisé en ce que la surface de came est constituée par une fente oblique (27).

5. Frein à tambour suivant la revendication 1, caractérisé en ce que l'axe intermédiaire (19) est guidé par une biellette de guidage articulée (31) pour former une liaison articulée entre l'axe intermédiaire et la plaque de support (11) du frein.

6. Frein à tambour suivant la revendication 5, caractérisé en ce que la biellette de guidage articulée (31) est agencée pour être sollicitée élastiquement contre une butée (33) pour forcer les bras de la genouillère vers la condition de grande longueur efficace.

0 021 658

FIG. 1

FIG. 2

FIG. 3

FIG. 4

'R'

FIG. 5

'R'